# EUROPEAN PATENT SPECIFICATION

(11) **EP 0 376 662 B1**
(45) Date of publication and mention of the grant of the patent: **10.08.1994**
(21) Application number: 89313546.7
(22) Date of filing: 22.12.1989
(51) Int. Cl.: C08F 283/01, C08F 299/02

(54) **Raw-material for pregellation, method for preparation of pregel, pregel, method for production of molded material, and molded material**
Rohstoffmaterial für die Gelierung, Verfahren für die Herstellung von vorgeliertem Stoff, Verfahren für die Herstellung von Formmaterial und Formmaterial
Matière première pour la prégélification, méthode de préparation de prégel, méthode de préparation de matière moulée et matière moulée

(30) Priority: 28.12.1988 JP 329210/89; 18.05.1989 JP 122767/89
(43) Date of publication of application: 04.07.1990
(73) Proprietor: NIPPON OIL AND FATS COMPANY, LIMITED, Chiyoda-ku Tokyo (JP)
(72) Inventor: Ikeda, Yoshitaka, Chita-gun Aichi-ken (JP); Takamatsu, Chihiro, Chita-gun Aichi-ken (JP); Matsuyama, Kazuo, Gamagouri-shi Aichi-ken (JP)
(74) Representative: Daley, Michael John

(56) References cited:
- FR-A- 2 018 948
- FR-A- 2 535 329
- DATABASE CHEMICAL ABSTRACTS, (HOST:STN), 1983, NO 100(16):122029V, Columbus, Ohio, US; "Effect of chain propagation agent on the hardening of unsaturated polyester" Shigeki et al. KYOKA PURASUCHIKKUSU, 29(8), 357-62

## Description

This invention relates to a raw-material for pregellation containing a radical polymerizable or copolymerizable thermosetting resin as a substantially main component thereof, a method for the preparation of a pregel from the raw-material, a pregel prepared by the method, a method for the production of a molded material of the pregel, and a molded material produced by the method.

The pregel of this invention can be employed for substantially the same uses as such tack-free molding materials as SMC and BMC which are used in the field of FRP (fiber-reinforced plastics). To be specific, it can be used as a molding material for plastic bathtubs, sanitation tanks, vehicle parts, and parts in electric appliances. It can be also used as a molding material for non-FRP products such as buttons, printed boards, and man-made marble. The molded materials of this invention are used in the field of FRP using a thermosetting resin as a binder and non-FRP containing no glass fiber.

The term "pregel" as used in this specification refers to what is obtained from a material containing a liquid radically polymerizable or copolymerizable thermosetting resin as a substantially main component thereof and generally it possesses viscous and elastic and tack-free properties.

The material which is obtained by gelling the raw-material for pregellation to the extent of assuming a semi-rigid consistency is also embraced in the present invention.

The molding materials originating in a pregel of such radical polymerizable or copolymerizable thermosetting resins as unsaturated polyester resins are represented by SMC's (sheet molding compounds) and BMC's (bulk molding compounds). Numerous methods using thickener and specific devices have been proposed for the pregellation of such materials. To cite typical examples, (a) a method which effects the pregellation by the use of an oxide or hydroxide of such an alkaline earth metal as magnesium or calcium (U.S. Patent No. 2,568,331), which has led to the publication of numerous proposals regarding viscosity regulation, (b) a method which effects the pregellation by the use of boron trifluoride or a complex thereof with acetic acid (British Patent No. 920,901), (c) a method which effects the pregellation by the use of an alkoxide of such a metal as aluminum or titanium (British Patent No. 920,902), and (d) a method which effects the pregellation by the use of radiation or an electron beam which is claimed to prepare a stable pregel have been proposed.

In the curing of an unsaturated polyester resin, it has been known in the art to use 2,4-diphenyl-4-methyl-1-pentene for the purpose of lowering the highest temperature to be reached by the accumulation of heat of curing, or terminating the reaction of curing before the completion (Japanese Patent Public Disclosure SHO 59(1984)-81322).

The SMC's and BMC's are tack-free molding materials (equivalent to "pregels" as termed in this invention) which are produced by impregnating glass fibers, for example, with compounds containing as a binder a thermosetting resin such as an unsaturated polyester resin which is capable of radical polymerization or copolymerization, calcium carbonate as a filler, the oxide of an alkaline earth metal as a thickener, zinc stearate as a mold release agent, any of various toners as a coloring agent, and any of various organic peroxide as a hardening catalyst, and thickening the products of impregnation. This thickening requires the aging of the products of impregnation at a temperature of about 40°C for two to three hours. This fact constitutes the largest drawback of such SMC's and BMC's. Also, the method which accomplishes the pregellation by the use of boron trifluoride or an organic complex thereof or an alkoxide of such metal as aluminum or titanium necessitates use of a special unsaturated polyester resin. The pregel cannot be easily obtained from any unsaturated polyester resin composition in ordinary use in these methods.

The method which attains the pregellation by the use of radiation or an electron beam is claimed to be capable of producing a pregel of stable quality. However, it incurs a great cost for the provision of facilities and devices. It also requires for special techniques and advanced skills on the part of workers and entails observance of legal regulations. Thus, this method cannot be readily adopted.

Buttons are manufactured in the field of non-FRP containing no glass fiber. Generally, the buttons are produced by heating an unsaturated polyester resin with a rotary drum or a metallic pipe thereby preparing a sheet or tube of pregel and subjecting the sheet or tube of pregel to a punching treatment, a heat treatment, and cutting work. Since curing and/or cross-linking reactions proceed in the pregel at room temperature, the treatments mentioned above must be carried out immediately after the pregel is prepared.

Even when the pregel is prepared, there is the possibility that it will be unable to form a molded material by the heat treatment or that it will be incapable of retaining its initial pregel state for a long period and immediately transform into a molded material.

The invention as claimed herein is directed to a raw-material for pregellation and a pregel which are free from the drawbacks mentioned above and further to a method for the preparation of a pregel from the raw-material for pregellation, a method for the production of a molded material from the pregel, and the molded material.

The inventors conducted a study on the curing reaction of a radically polymerizable or copolymerizable thermosetting resin in the presence of at least either of 2,4-diphenyl-4-methyl-1-pentene represented by the following formula wherein Ph is phenyl group (I): 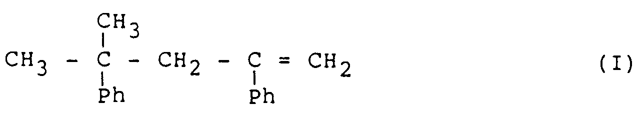
and terpinolene represented by the following formula (II): 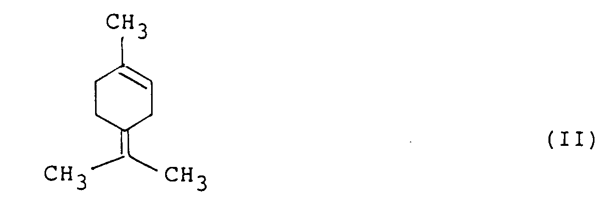
This study has led the inventors to the knowledge that a raw-material for pregellation combined with a specific organic peroxide is capable of preparing a pregel free from the drawbacks mentioned above. As a result, this invention has been completed.

To be specific, this invention relates to a raw-material for pregellation characterized by having a radically polymerizable or copolymerizable liquid thermosetting resin as a substantially main component thereof and containing 0.2 to 10% by weight, based on the amount of the resin, of at least one compound selected from the group consisting of 2,4-diphenyl-4-methyl-1-pentene and terpinolene, 0.001 to 0.5% by weight, based on the amount or the resin, of at least one low temperature-decomposing organic peroxide possessing a 10-hour half-life temperature in the range of 35°C to 80°C, and 0.5 to 2% by weight, based on the amount of the resin, of at least one high temperature-decomposing organic peroxide (hereinafter referred to as a "high-temperature catalyst") selected from the group consisting of peroxyketals, peroxyesters, and dialkyl peroxides, which possesses a 10-hour half-life temperature in the range of 80°C to 140°C and exceeds a 10-hour half-life temperature of the lower temperature-decomposing organic peroxide (hereinafter referred to as "low-temperature catalyst") by at least 30°C; to a method for the preparation of a pregel which comprises heating the raw-material for pregellation at a temperature in the range of 60°C to 100°C; to a pregel prepared by the method; to a method for the production of a molded material by the steps of molding the pregel in a prescribed shape and heating the shaped pregel at a temperature in the range of 120°C to 170°C; and to a molded material produced by the method.

This invention has the following characteristic features. The preparation of a pregel from the raw-material for pregellation of this invention is effected simply by application of heat and is attained quickly and very easily. The pregel so prepared is stable for long periods at room temperature and easy to deform into various shape. Since the raw-material for pregellation has no need for any special thickener, it is capable of producing a pregel of excellent quality. Molded materials of FRP and non-FRP possessing sufficient rigidity can be obtained by molding the pregel in prescribed shapes and heat-treating the shaped masses of pregel at a temperature in the range of 120°C to 170°C.

Since the pregel is obtainable by virtue of a polymerization reaction of a very low degree of conversion, this preparation can be attained from a member selected from a wide range of thermosetting resins without requiring any special functional group.

Now, the present invention will be described in detail below.

The 2,4-diphenyl-4-methyl-1-pentene [represented by the formula (I) shown above] is a slightly viscous, colorless, and odorless liquid. Because of its own ability to regulate polymerization, it is allowed on being used in combination with a low-temperature setting catalyst, to prepare a pregel with the impression of transparency and massiveness.

The terpinolene is a slightly viscous colorless and odorless liquid, and it is capable of being used in combination with a low-temperature catalyst, to prepare a pregel with the impression of transparency and massiveness. When the 2,4-diphenyl-4-methyl-1-pentene are used in common with the terpinolene, the pregel prepared have the similar properties.

The amount of 2,4-diphenyl-4-methyl-1-pentene and/or terpinolene to be used is varied with the kind and the degree of unsaturation of the radically polymerizable or copolymerizable thermosetting resin, the kind and the quantity of the low-temperature catalyst to be put to combined use, the treating temperature and time for pregellation, and the degree of pregellation. Generally, this amount is in the range of 0.2 to 10% by weight, preferably 0.5 to 7% by weight, based on the amount of the resin mentioned above. If this amount is less than 0.2% by weight, the state of the pregel is incapable of being retained for a long time. If the amount exceeds 10% by weight, the preparation of the pregel as desired has a disadvantage that the treating temperature must be heightened or the treating time lengthened.

The raw-material for pregellation of this invention contains therein a low-temperature catalyst having a 10-hour half-life temperature in the range of 35°C to 80°C. The term "10-hour half-life temperature" refers to the temperature at which the half life of the thermal decomposition of a sample dissolved in benzene in a concentration of 0.05 mol/liter is 10 hours.

Now, organic peroxides which are usable as a low-temperature catalyst in the present invention are listed in Table 1 below.

**Table 1**

| Organic peroxide | 10-hour half-life temperature, °C |
|---|---|
| Cumyl peroxyneodecanoate | 37 |
| Di(tertiary butylcyclohexyl) peroxydicarbonate | 40.5 |
| Dinormal propyl peroxydicarbonate | 40.5 |
| Diisopropyl peroxydicarbonate | 41 |
| Dimyristyl peroxydicarbonate | 41 |
| Di(2-ethoxyethyl) peroxydicarbonate | 43 |
| Di(2-ethylhexyl) peroxydicarbonate | 44 |
| Tertiary butyl peroxyneodecanoate | 47 |
| Tertiary butyl peroxypivalate | 55 |
| 3,5,5-Trimethylhexanoyl peroxide | 60 |
| Dilauroyl peroxide | 62 |
| Tertiary butyl peroxy-2-ethylhexanoate | 72.5 |
| Dibenzoyl peroxide | 74 |
| Tertiary butyl peroxyisobutylate | 78 |

The role of the low-temperature catalyst resides in causing the raw-material for pregellation of this invention to be converted into a pregel in a desired degree within a desired span of time. Particularly, the degree of the conversion of the raw-material for pregellation into the pregel is variable with a rich variety of purposes for which the prepared pregel is used. Such molding materials as SMC's and BMC's, for example, are required to undergo the gelling reaction until they assume a nearly semi-rigid state. There are fields of application in which the pregellation reaction must be discontinued while the raw-material still retains a viscous state like pudding or dough.

The content of the low-temperature catalyst in the raw-material for pregellation, therefore, is adjusted in accordance with the quality which the prepared pregel is expected to acquire. This content should be not more than 0.5%, preferably not more than 0.3%, based on the amount of the radically polymerizable or copolymerizable thermosetting resin. If the content exceeds 0.5%, the gelling reaction is continued into the subsequent crosslinking reaction and, as a result, the physical properties of the finished molded material are inferior. If this content is less than 0.001%, the gelling reaction lacks economic feasibility because the time required for pregelling treatment is lengthened or the temperature of treatment is heightened. The amount of the low-temperature catalyst to be added is also variable with the kind and quantity of a polymerization inhibitor to be contained in the radically polymerizable or copolymerizable thermosetting resin composition.

The high-temperature catalyst having a 10-hour half-life temperature in the range of 80°C to 140°C and contained in the raw-material for pregellation of this invention will be described below.

The amount of the high-temperature catalyst to be added is in the range of 0.5 to 2% by weight, based on the amount of the resin similarly in the curing of an ordinary unsaturated polyester resin.

If this amount is less than 0.5% by weight, the molded material to be obtained fails to acquire the quality aimed because the curing reaction cannot be completed.

If this amount exceeds 2% by weight, the molded material to be obtained fails to acquire high strength, because the curing reaction proceeds quickly and the molded material in the process of curing sustains cracks.

The high-temperature catalyst to be used in the present invention is selected from the group consisting of peroxy ketals, peroxy esters, and dialkyl peroxides.

The high-temperature catalyst to be used in this invention discharges its function in the treatment of the pregel at an elevated temperatures. This catalyst must be incorporated in advance in the raw-material for pregellation. If it is not added to the pregel, it cannot be uniformly dispersed therein. In the organic peroxides which have 10-hour half-life temperatures in the range of 80°C to 140°C, the compounds which are classified as ketone peroxides and hydroperoxides are undesirable for this invention because they discharge their function during the course of the pregelling reaction in the present invention.

Now, typical examples of the high-temperature catalyst to be used in this invention are cited in Table 2 below.

**Table 2**

| Organic peroxide | 10-hour half-life temperature, °C |
|---|---|
| 1,1-Bis(tertiary hexylperoxy)cyclohexane | 87 |
| 1,1-Bis(tertiary hexylperoxy)-3,3,5-trimethyl cyclohexane | 87 |
| 1,1-Bis(tertiary butylperoxy)-3,3,5-trimethyl cyclohexane | 90 |
| 1,1-Bis(tertiary butyl peroxy)cyclohexane | 91 |
| Tertiary butylperoxyisopropyl carbonate | 98 |
| Tertiary butylperoxy benzoate | 104 |
| Dicumyl peroxide | 117 |
| 2,5-Dimethyl-2,5-bis(tertiary butylperoxy)hexane | 118 |
| α,α-Bis(tertiary butylperoxy-m-isopropyl) benzene | 119 |
| Tertiary butylcumyl peroxide | 120 |
| Ditertiary butyl peroxide | 124 |
| 2,5-Dimethyl-2,5-bis(tertiary butylperoxy)hexine-3 | 135 |

This invention requires the difference in 10-hour half-life temperature between the low-temperature catalyst and the high-temperature catalyst to be not less than 30°C. If the difference is less than 30°C, the curing reaction cannot be stopped while the pregel still retains its consistency as a pregel, but may continue into complete curing.

The temperature of the treatment for the pregellation reaction is selected in the range of 60°C to 100°C in accordance with the kind and the amount of addition of the low-temperature catalyst and the degree of pregellation. If this temperature is lower than 60°C, the time of treatment must be lengthened. If the temperature exceeds 100°C, the pregelling reaction lacks economic feasibility because it has the possibility of entailing a runaway reaction leading to violent curing and/or cross-linking reaction.

The term "radically polymerizable or copolymerizable thermosetting resin" as used in the present invention refers not only to ordinary unsaturated polyester resins but also to such thermosetting acryl resins as epoxy acrylate resins, polyurethane polyacrylate or polymethacrylate resins which will be described hereinafter. Specifically, unsaturated polyester resins which are mixtures between unsaturated alkyds obtained by the condensation polymerization of unsaturated dibasic acids represented by maleic acid or fumaric acid and saturated dibasic acids represented by phthalic acid with glycols represented by ethylene glycol, propylene glycol, or bis-phenol A and polymerizable unsaturated monomers represented by styrene, diallyl phthalate, or methacrylic esters may be cited as examples.

Further, epoxy acrylate resins which are generally called vinyl esters, i.e. the mixtures between the products of ring-opening addition of radically polymerizable unsaturated monobasic acids represented by acrylic acid or methacrylic acid either alone or in conjunction with unsaturated dibasic acids represented by fumaric acid, maleic acid, or adipic acid to epoxy resins represented by epichlorohydrin type epoxy resins, methyl epichlorohydrin type epoxy resins, and alicyclic epoxy resins, and polymerizable unsaturated monomers represented by styrene, acrylic esters, methacrylic esters, and diallyl phthalate are also embraced in the radically polymerizable or copolymerizable thermosetting resins contemplated by the present invention.

Moreover, as thermosetting acryl resins, those which are generally called as thermosetting resins of polyurethane polyacrylates or polymethacrylates, i.e. the mixtures between unsaturated urethanes obtained by the reaction of at least twice as large in mole number of hydroxyalkyl acrylates or methacrylates with polyisocyanates possessing isocyanate functional groups, and polymerizing monomers represented by methyl methacrylate and/or styrene are embraced in the radically polymerizable or copolymerizable thermosetting resins of this invention. Since the unsaturated urethanes obtained as described above have no such functional group as carboxy group and/or hydroxyl group, they are not enabled to produce pregels by the method using such a thickener as magnesium oxide. They are enabled to produce pregels only by the method of this invention.

The raw-material for pregellation of this invention may incorporate therein various known additives, e.g. low-shrinkage additives such as polystyrene and vinyl acetate, glass fibers, various inorganic fillers, pigments toners, and thickeners, which are used generally in the field of FRP molding.

The molded material of this invention can be produced by any of the molding methods generally employed in the field of FRP molding, such as, for example, resin injection method, cold press method, preform matched-metal die method, SMC method, BMC method, pultrusion method, continuous panel method, and filament winding method.

Now, the reaction processes of the first-state heating (for preparation of pregel) and the second-stage heating (for production of molded material) in the present invention will be described. The 2,4-diphenyl-4-methyl-1-pentene possesses a double bond. When the raw-material for pregellation is heated, this double bond brings about the following reaction, for example, by virtue of the low-temperature catalyst.

The thermosetting resin, on being heated, begins to polymerize in the presence of the low-temperature catalyst, and the reaction of growth of the polymer radical in the thermosetting resin is repeated. The growth radical of polymer formed in consequence of the reaction mentioned above adds to the double bond of 2,4-diphenyl-4-methyl-1-pentene to cause the reaction of growth of the polymer radical to stop temporarily. 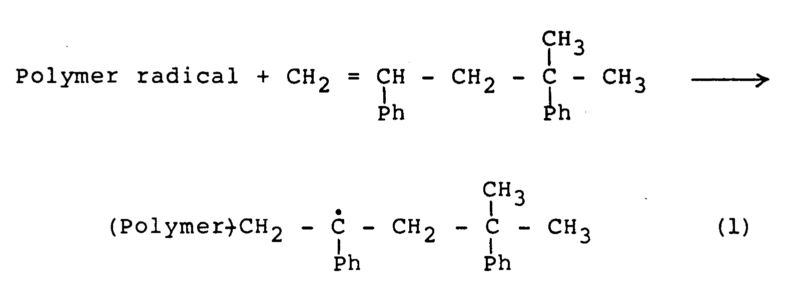
The radical formed by this addition adds further to the polymerizable unsaturated monomer such as, for example, styrene, which is contained in the unaltered portion of the thermosetting resin, to reinitiate the polymerization again. 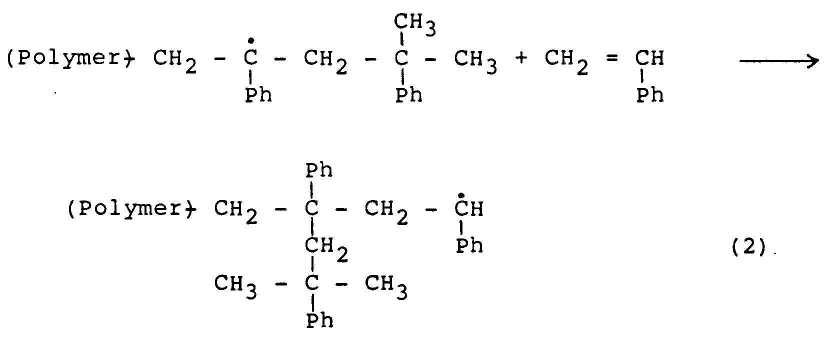
In this reaction, the 2,4-diphenyl-4-methyl-1-pentene functions as one type of vinyl monomer to suppress abrupt advance of the reaction and stops the reaction. Consequently, the reaction product is still in the form of pregel.

In the meantime, the polymer radical formed of the thermosetting resin abstracts a hydrogen atom out of the 2,4-diphenyl-4-methyl-1-pentene as shown in the following equation (3) to stop the reaction for forming the polymer radical. 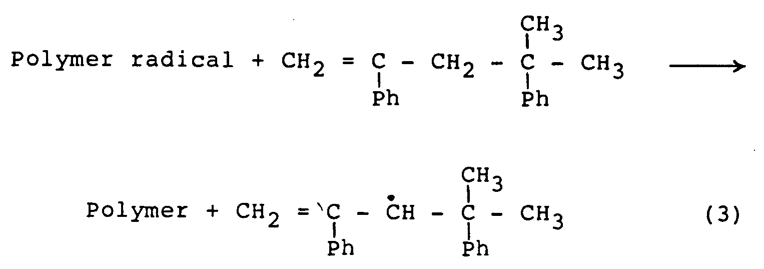
The radical formed from the 2,4-diphenyl-4-methyl-1-pentene either reinitiates the polymerization of the polymerizable unsaturated monomer such as, for example, styrene, which is contained in the thermosetting resin (Equation 4) or reacts with the polymer radical to terminate the reaction of growth (Equation 5). 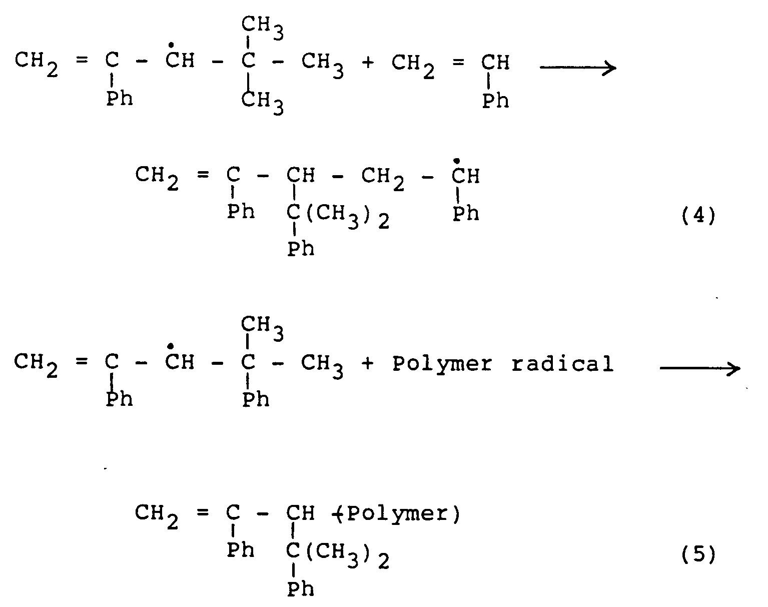
The reaction of Equation (3) is a radical chain transfer reaction which, in the step of pregellation, functions to lower the molecular weight of the polymer. The radical of 2,4-diphenyl-4-methyl-1-pentene which is obtained by the radical chain transfer reaction possesses a double bond and attaches the double bond to the terminal of the polymer as shown in the equations, (4) and (5). Owing to the heat-treatment performed in the second step by the use of the high-temperature catalyst, this double bond forms a cross-linked bond by the copolymerization with the unsaturated oligomer or copolymerizable monomer in the thermosetting resin. As a result, the cured product is allowed to acquire improved physical properties. Thus, there is virtually no possibility of adversely affecting the physical properties of the product based on the 2,4-diphenyl-4-methyl-1-pentene.

What has been described with respect to the 2,4-diphenyl-4-methyl-1-pentene applies substantially similarly to terpinolene. The growth radical of polymer, for example, abstracts a hydrogen atom out of the terpinolene and terminates the reaction of growth (Equation 6). 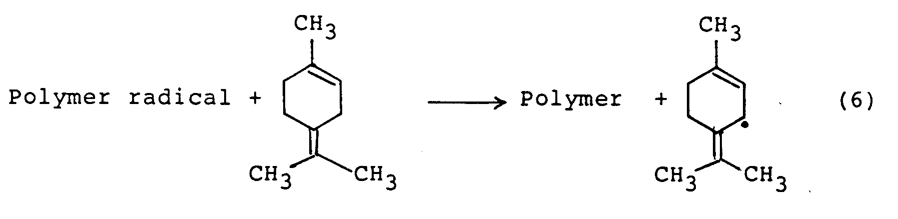
The radical of terpinolene formed by the reaction of Equation (6) adds to the polymerizable unsaturated monomer such as, for example, styrene in the thermosetting resin to reinitiate the polymerization or to react with the polymer radical to terminate the reaction of growth.

The reaction represented by the Equation (6), is a radical chain transfer reaction which suppresses abrupt exothermic reaction and functions to lower the molecular weight of the polymer. Thus, the reaction is terminated while the reaction product is still in the state of pregel.

The terminal of the polymer formed by reinitiating the polymerization or terminating the polymer radical by the radical of terpinolene shown in the Equation (6) have the double bond originating in the terpinolene.

Owing to the heat-treatment performed at the second stage by the use of the high-temperature setting catalyst, the double bond mentioned above forms a cross-linked bond by the copolymerization with the unsaturated oligomer or polymerizable unsaturated monomer in the thermosetting resin. As a result, the physical properties of the product are improved. Thus, the terpinolene has no possibility of adversely affecting the physical properties of the product.

For more specific illustration of the present invention, the following examples are presented which are intended to be merely illustrated of and not in any sense limitative of the invention. The curing catalysts involved herein will be referred to by the following acronyms.

### Low-temperature catalyst:

- TCP: Di(tertiary butylcyclohexyl)peroxy dicarbonate (98% grade)
- MSP: Dimyristil peroxydicarbonate (98% grade)
- BND: Tertiary butyl peroxyneodecanoate (70% dilution grade)
- BPV: Tertiary butyl peroxypivarate (70% dilution grade)
- TBPO: Tertiary butyl peroxy-2-ethylhexanoate (50% dilution grade)
- BPO: Dibenzoyl peroxide (50% dilution grade)

### High-temperature catalyst:

- HC: 1,1-Bis(tertiary hexylperoxy)cyclohexane (90% grade)
- TBPB: Tertiary butyl peroxybenzoate (99% grade)
- DCP: Dicumyl peroxide (99% grade)
- 25B: 2,5-Dimethyl-2,5-bis(tertiary butylperoxy)hexane (90% grade)
- DTBP: Di-tertiary butyl peroxide (99% grade)

The physical properties dealt with in the following experiments are defined below.
- PGT:: The time required for a given liquid raw-material for pregellation to become an elastic and viscous substance exhibiting a viscosity of about 50 poises at 80°C.
- GT:: The time required for a given liquid material for pregellation to lose viscosity and become a nearly semi-rigid substance exhibiting a viscosity of about 1,000,000 poises at 80°C.
- Barcol hardness:: the magnitude of surface hardness of a given sample determined by measurement with a Barcol hardness meter, Model GYZJ-934-1.

The term "pregel" refers to a non-adhesive viscous substance obtained between the points of PGT and GT. The magnitudes of PGT and GT were determined by touch with the finger tip or measurement of viscosity.

### EXAMPLES 1 TO 3

A composition consisting of 150 g of a highly reactive iso-phthalic acid type unsaturated polyester resin (solution in styrene of an unsaturated polyester obtained from isophthalic acid and glycol), 1% by weight (the same hereinafter) of 2,4-diphenyl-4-methyl-1-pentene (produced by Nippon Oil & Fats Co., Ltd. and marketed under the tradename "Nofmer-MSD"), 1% of DCP as a high-temperature catalyst, and a varying amount of TCP as a low-temperature catalyst was placed in a glass beaker 65 mm in inside diameter and 85 mm in height, directly immersed in an oil bath at 80°C, stirred with stainless steel stirring blades 50 mm in diameter, and tested for PGT and GT. The amount of the catalyst and the results of the test are shown in Table 3.

**Table 3**

| Example No. | | 1 | 2 | 3 |
|---|---|---|---|---|
| Amount of low-temperature catalyst, TCP, added (%) | | 0.03 | 0.05 | 0.07 |
| Amount of high-temperature catalyst, DCP, added (%) | | 1.0 | 1.0 | 1.0 |
| Curing properties | PGT (minute) | 48 | 30 | 20 |
| | GT (minute) | equal or more than 180 | 48 | 30 |

The numerical values of PGT and GT (both in minutes) decreased in proportion as the amount of the low-temperature catalyst added increased. The compound incorporating therein 1% of Nofmer-MSD and 0.03% of TCP retained the state of pregel for more than 3 hours at a temperature of 80°C (pregel having the consistency of pudding or soft dough).

When the composition of Example 3 was kept in the oil bath at 80°C for more than 30 minutes (more than GT), it was found to become a gel of rigid consistency.

However, when the composition of Example 3 was kept in the oil bath at 80°C for 30 minutes to form pregel, cooled to 20°C, and tested for viscosity, it was found to possess 2,800 poises of viscosity. Since the raw-material for pregellation possessed a viscosity of 2 poises before pregelling reaction, the results of this test indicated that the reaction increased the viscosity to 1,400 times the original level to form pregel. After about one month's standing at 20°C, the pregel showed no discernible change in viscosity. The pregel, when molded at 145°C in a metallic die (100 mm x 100 mm x 7 mm), produced the molded material of a perfectly uniform flat plate. The Barcol hardness of the molded material was in the range of 46 to 48.

The pregel of this example possessed a stable quality giving the impression of transparency and massiveness, was capable of retaining this state for an ample period and, therefore, could be molded easily to produce a molded material of stable quality.

### COMPARATIVE EXPERIMENT 1

When a composition of Example 3 was kept for 40 minutes (more than GT) in an oil bath at 80°C and then molded at 145°C in the same metallic die, the molded material consequently obtained was in a whitened state and betrayed a poor surface state. The Barcol hardness of the molded material was in the range of 40 to 45. The inferior quality was due to excessive gelling of the composition so that it lacked flowability during molding.

### COMPARATIVE EXPERIMENTS 2 AND 3

Two composition were obtained by following the procedure of Examples 1 to 3, except that the addition of Nofmer-MSD was omitted and MSP was used in varying amount as a low-temperature catalyst, and 1.0% of DCP was used as a high-temperature catalyst.

The amounts of the catalysts added and the results of the test are shown in Table 4.

**Table 4**

| Comparative Experiment No. | | 2 | 3 |
|---|---|---|---|
| Amount of low-temperature catalyst, MSP, added (%) | MSP | 0.05 | 0.07 |
| Amount of high-temperature catalyst, DCP, added (%) | DCP | 1.0 | 1.0 |
| Curing properties | PGT (minute) | 18 | 15 |
| | GT (minute) | 25 | 17 |

It was found that the composition incorporating no Nofmer-MSD, showed an abrupt increase of viscosity after the point of GT at 80°C to form a gel, and finally was in a semi-rigid to rigid state. The composition could not retain the state of a pregel.

### COMPARATIVE EXPERIMENT 4

A composition was obtained by following the procedure of Example 3, except that the addition of DCP as a high-temperature catalyst was omitted. When the composition was immersed and stirred in an oil bath at 80°C, it showed a PGT of 20 minutes and a GT of 30 minutes. When the pregel was heated in the same metallic die as used in Example 3 at 145°C, it was not perfectly cured and could not produce a molded material. An attempt was made to add a high-temperature catalyst to the pregel, but it could not be uniformly dispersed in the pregel. Thus a stable molded material could not be obtained after heat-treatment in the second stage.

### EXAMPLES 4 TO 7

Compositions were obtained by following the procedure of Examples 1 to 3, except that a varying low-temperature catalyst was used, 1.0% of DCP was used as a high-temperature catalyst, and 1% of Nofmer-MSD was used and the temperature of the oil bath was fixed at 80°C. The amounts of the catalysts added and the curing properties determined are shown in Table 5.

**Table 5**

| Example No. | | 4 | 5 | 6 | 7 |
|---|---|---|---|---|---|
| Amount of low-temperature catalyst added (%) | | | | | |
| TCP | | 0.05 | | | |
| BPV | | | 0.04 | | |
| TBPO | | | | 0.06 | |
| BPO | | | | | 0.06 |

| Amount of high-temperature catalyst added (%) | | | | | |
|---|---|---|---|---|---|
| DCP | | 1.0 | 1.0 | 1.0 | 1.0 |
| Curing properties | PGT (minute) | 30 | 35 | 40 | 210 |
| | GT (minute) | 48 | 56 | 60 | 260 |

The time from the point of PGT to that of GT varied with the kind of the low-temperature catalyst. Even after one month's standing at 30°C, the pregels retained their original states intact. The pregels left standing at 30°C for one month were heated in an oil bath at 140°C for about 10 minutes and then removed from the oil bath. The molded material of Examples 4 to 7 were colorless and transparent, and showed values of Barcol hardness in the range of 50 to 53.

### EXAMPLE 8

A pregel treated in an oil bath at 80°C for 45 hours by following the procedure of Example 4 was transferred in an amount of 200 g into a table-top kneader. The pregel and 300 g of aluminum hydroxide (produced by Showa Light Metals Co., Ltd. and marketed under the tradename "Hidilite H-320") added thereto as a filler were blended for 10 minutes in an oil bath at about 50°C. When the resultant blend was cooled to room temperature, there was obtained a tack-free solid substance. A test piece (100 mm x 100 mm x 5 mm) was molded by heating and pressurizing the solid substance in a metallic die at 145°C for five minutes. This test piece showed a Barcol hardness in the range of 54 to 56. The test piece had the appearance of man-made marble giving the impression of massiveness and depth.

### EXAMPLES 9 TO 12

Compositions consisting of a medially reactive ortho-phthalic acid type unsaturated polyester resin (solution in styrene of an unsaturated polyester obtained from phthalic acid and glycol), 0.04% of BND as a low-temperature catalyst, 1% of any of HC, DCP, 25B, and DTBP as a high-temperature catalyst, and 2% of Nofmer-MSD were tested in an oil bath at 80°C for curing properties. The test results were evaluated by following the procedure of Examples 1 to 3, with necessary modifications. The amounts of catalysts added and the curing properties are shown in Table 6.

**Table 6**

| Example No. | | 9 | 10 | 11 | 12 |
|---|---|---|---|---|---|
| Amount of low-temperature catalyst, BND added (%) | | 0.04 | 0.04 | 0.04 | 0.04 |

| Kind and amount added of high-temperature catalyst | | | | | |
|---|---|---|---|---|---|
| (%) | | | | | |
| HC | | 1.0 | | | |
| DCP | | | 1.0 | | |
| 25B | | | | 1.0 | |
| DTBP | | | | | 1.0 |
| Curing properties | PGT (minute) | 26 | 52 | 42 | 54 |
| | GT (minute) | 36 | 82 | 65 | 90 |

The pregels showing about 3,000 poises of viscosity at 80°C, when left cooling, were colorless and transparent and, even after about one month's standing at 30°C, showed no discernible change in viscosity.

### COMPARATIVE EXPERIMENT 5

A composition was produced by using the same unsaturated polyester resin as in Examples 9 to 12, omitting the addition of the low-temperature catalyst, using 0.1% of DCP as a high-temperature catalyst and 2% of Nofmer-MSD, and heat-treating the composition at 145°C. It failed to retain the state of pregel and underwent gellation and finally assumed a rigid state. From the results of Comparative Experiments 4 and 5, it is clearly seen that pregels excellent as molding materials could not be obtained even by the use of the method disclosed in Japanese Patent Public Disclosure SHO 59(1984)-81322.

### EXAMPLE 13

When a raw material prepared by adding to 400 g of a medially reactive ortho-phthalic acid type unsaturated polyester resin, 0.025% by TCP as a low-temperature catalyst, 1.0% of DCP as a high-temperature catalyst, and 1.0% of Nofmer-MSD was reacted in an oil bath at 80°C under nitrogen gas, the PGT was found to be 27 minutes and the GT to be 90 minutes.

### EXAMPLES 14 TO 18

Pregels were prepared by following the procedure of Example 13, except that the time of reaction in the oil bath at 80°C was varied. The pregels obtained after the varying lengths of reaction time were tested for viscosity at 80°C. The pregels were molded in a metallic die at 140°C for six minutes, removed from the die, left standing for one hour, and tested for outward appearance and Barcol hardness. The results were as shown in Table 7. The outward appearance was rated on a two-rank scale, wherein the mark ⓞ stands for absence of turbidity and the mark o for presence of slight turbidity.

**Table 7**

| Example No. | Reaction time (min.) | Viscosity at 80°C (poise) | Barcol hardness of molded material | Outward appearance of molded material |
|---|---|---|---|---|
| 14 | 30 | 64 | 38 ∼ 45 | ⓞ |
| 15 | 40 | 2170 | 47 ∼ 49 | ⓞ |
| 16 | 50 | 24300 | 47 ∼ 49 | ⓞ |
| 17 | 60 | 300000 | 43 ∼ 47 | ⓞ |
| 18 | 80 | 900000 | 43 ∼ 45 | o |

It is clearly noted from the table that the pregels showed conspicuously varied magnitudes of viscosity from the point of PGT to that of GT and the corresponding molded materials showed no notable change in hardness and outward appearance and that, therefore, the pregels are sufficiently useful as molding materials.

### EXAMPLES 19 AND 20

Compositions prepared by adding to 30 g of epoxy acrylate resin (produced by Mitsubishi Gas Chemical Co., Ltd. and marketed under the tradename "Neopol 8250 HH), a varying amount of TCP as a low-temperature catalyst and a varying amount of Nofmer-MSD were tested in an oil bath at 80°C. The test was conducted by following the procedure of Examples 1 to 3, except that 1.0% of DCP was used as a high-temperature setting catalyst. The test results are shown in Table 9.

**Table 9**

| Example No. | | 19 | 20 |
|---|---|---|---|
| Amount of Nofmer-MSD added (%) | | 5.0 | 7.0 |
| Amount of low-temperature catalyst, TCP, added (%) | | 0.25 | 0.25 |
| Amount of high-temperature catalyst, DCP, added (%) | | 1.0 | 1.0 |
| Curing properties | PGT (minute) | 36 | 65 |
| | GT (minute) | 56 | about 3 hrs. |

It is clearly seen from the results that the time required for the epoxy acrylate resin to be converted into a pregel could be shortened to some extent by the incorporation into the composition of 0.025% of TCP as a low-temperature catalyst. In the case of Example 20, the time required for the pregel to assume a semi-rigid state could be markedly elongated by the addition of 7% of MSD.

### COMPARATIVE EXPERIMENT 6

A composition prepared by adding to 30 g of a highly reactive isophthalic acid type unsaturated polyester, 1% of a solution in methanol of about 14% of boron trifluoride was left reacting in an oil bath at 80°C in the present of 1% of DCP as a high-temperature catalyst, but in the absence of a chain transfer agent and a low-temperature catalyst. In this case, the composition formed a gel slightly after 225 minutes of the reaction. Even after seven hours' subsequent standing, the gel failed to assume the consistency of pudding. So, the test was discontinued. From the results, it may be safely concluded that boron trifluoride possessed poor ability to cause the unsaturated polyester resin to form a gel.

### COMPARATIVE EXPERIMENTS 7 AND 8

Aluminum triisopropoxide and titanium normal butoxide were evaluated by following the procedure of Comparative Experiment 3. The test was performed at 80°C. In the test, the addition of low-temperature catalyst, high-temperature catalyst, and Nofmer-MSD was omitted. The amount of gel added and the curing properties are shown in Table 10.

**Table 10**

| Example No. | 7 | 8 |
|---|---|---|
| Amount of gelling agent added (%) | | |
| Aluminum triisopropoxide | 1.0 | |
| Titanium normal butoxide | | 1.0 |

| Curing property | | |
|---|---|---|
| Time for formation of gel | 5 hours or more | 5 hours or more |

As demonstrated in Comparative Experiments 7 and 8, such alkoxides as aluminum triisopropoxide and titanium normal butoxide possessed, a very weak power to form a gel of the unsaturated polyester resin even at such a temperature as 80°C.

### EXAMPLE 21

A composition prepared by adding to 30 g of a polyurethane polyacrylate type thermosetting acryl resin (produced by ICI and marketed under the tradename "Modal 835S"), 0.25% of TCP as a low-temperature catalyst, 1% of DCP as a high-temperature catalyst, and 1% of Nofmer-MSD was tested in an oil bath at a temperature of 80°C by following the procedure of Examples 1 to 3. It was consequently found that the reaction produced a highly satisfactory pregel showing a PGT of 30 minutes and a GT of 55 minutes.

### EXAMPLES 22 TO 24

A composition prepared by adding to 500 g of a medially reactive ortho-phthalic acid type unsaturated polyester resin, 1% of terpinolene (produced by Nippon Oil & Fats Co., Ltd. and marketed under the tradename "Nofmer-TP"), 1% of DCP as a high-temperature catalyst and varying amount of TCP as a low-temperature setting catalyst were directly immersed in an oil bath at 80°C, and tested for PGT and GT by following the procedure of Examples 1 to 3. The experiments were carried out under nitrogen gas. The amounts of the catalysts added and the curing properties are shown in Table 11 below.

**Table 11**

| Example No. | | 22 | 23 | 24 |
|---|---|---|---|---|
| Amount of low-temperature | | 0.025 | 0.05 | 0.07 |
| catalyst, TCP, added (%) | | | | |
| Amount of high-temperature | | 1.0 | 1.0 | 1.0 |
| catalyst, DCP, added (%) | | | | |
| Curing properties | PGT (minute) | 38 | 24 | 22 |
| | GT (minute) | 52 | 35 | 33 |

It is noted from the results that the times of PGT and GT decreased in proportion as the amount of the low-temperature catalyst increased and that in the case of Example 22, the pregel retained its state intact between 38 minutes and 52 minutes at a temperature of 80°C. The pregels obtained in the examples assumed the consistency of transparent pudding or soft dough. When the composition of Example 24 was left standing in an oil bath at 80°C for about 40 minutes, there was formed a gel which showed absolutely no flowability. When the composition of Example 23 kept standing in an oil bath at 80°C for 30 minutes was suddenly cooled to 20°C, it was found to possess a viscosity of about 1,000,000 poises. After about one month' storage at 20°C, it showed no discernible change in viscosity. When this composition was molded in a metallic die (100 mm x 100 mm x 7 mm) at 145°C, there was obtained a perfectly uniform flat plate. The Barcol hardness of this flat plate was in the range of 46 to 48.

The pregels obtained in these examples possessed a stable quality producing the impression of transparency and massiveness. They retained easy moldability for a sufficient period and were capable of producing molded material of stable quality.

### COMPARATIVE EXPERIMENT 9

When the composition of Example 24 was kept standing in an oil bath at 80°C for 40 minutes and molded in the same metallic die at 145°C, the molded material was in a whitened state and betrayed a poor surface condition. The Barcol hardness was in the range of 40 to 45. The inferior quality was due to excessive gelling reaction of the composition, because the composition lacked flowability during molding.

### COMPARATIVE EXPERIMENTS 10 AND 11

Compositions were obtained by following the procedure of Examples 22 to 24, except that the addition of the chain transfer agent was omitted, MSP was used as a low-temperature catalyst, and 1% of DCP was added as a high-temperature catalyst. The amounts of catalysts added and the curing properties are shown in Table 12.

**Table 12**

| Comparative Experiment No. | | 10 | 11 |
|---|---|---|---|
| Amount of low-temperature catalyst, MSP, added (%) | | 0.025 | 0.05 |
| Amount of high-temperature catalyst, DCP, added (%) | | 1.0 | 1.0 |
| Curing properties | PGT (minute) | 30 | 32 |
| | GT (minute) | 35 | 23.4 |

### EXAMPLES 25 TO 29

Compositions were prepared by following the procedure of Example 22, except that varying high-temperature catalysts were used, 1.0% of DCP was used as a high-temperature catalyst, 1% of Nofmer-TP was added, and the temperature of the oil bath was fixed at 80°C. The compositions were tested for PGT and GT. The amounts of the catalysts added and the curing properties are shown in Table 13.

**Table 13**

| Example No. | | 25 | 26 | 27 | 28 | 29 |
|---|---|---|---|---|---|---|
| Amount of low-temperature catalyst added (%) | | | | | | |
| TCP | | 0.05 | | | | |
| BPV | | | 0.04 | | | |
| TBPO | | | | 0.06 | | |
| BPO | | | | | 0.06 | |
| MSP | | | | | | 0.06 |

| Amount of high-temperature catalyst added (%) | | | | | | |
|---|---|---|---|---|---|---|
| DCP | | 1.0 | 1.0 | 1.0 | 1.0 | 1.0 |
| Curing properties | PGT (minute) | 24 | 22 | 25 | 38 | 38 |
| | GT (minute) | 35 | 35 | 40 | 53 | 59 |

The lengths of time required to reach PGT and GT varied with the kind of low-temperature catalyst. The pregels mentioned above retained their states intact even after one month's storage at 30°C. The pregels resulting from the one month's storage at 30°C were heated in an oil bath at 140°C for about 10 minutes and then removed from the oil bath. The molded materials obtained in Examples 25 to 29 were colorless and transparent and showed magnitudes of Barcol hardness in the range of 50 to 53.

### EXAMPLE 30

A pregel obtained in an amount of 200 g by following the procedure of Example 23, in an oil bath at 80°C for 30 minutes, was transferred into a table-top kneader. The pregel and 300 g of aluminum hydroxide (Hidilite H-320) added thereto as a filler were blended at about 50°C for 10 minutes. When the resultant blend was cooled to room temperature, there was obtained a solid substance having no adhesiveness. A test piece (100 mm x 100 mm x 5 mm) was produced by heating and pressurizing this solid substance in a metallic mold at 145°C for 5 minutes. This test piece showed a Barcol hardness in the range of 54 to 56. The molded material possessed the appearance of man-made marble giving the impression of massiveness and depth.

### EXAMPLES 31 TO 34

Pregels were prepared by following the procedure of Examples 22 to 24, except that 0.04% of BND was used as a low-temperature catalyst, 1.0% of any of HC, DCP, 25B and DTBP were used each as a high-temperature catalyst, 1% of Nofmer-TP was used, and the temperature of the oil bath was fixed at 80°C. These pregels were tested for curing properties. The amounts of the catalysts used and the curing properties are shown in Table 14.

**Table 14**

| Example No. | | 31 | 32 | 33 | 34 |
|---|---|---|---|---|---|
| Amount of low-temperature catalyst, BND, added (%) | | 0.04 | 0.04 | 0.04 | 0.04 |

| Amount of high-temperature catalyst added (%) | | | | | |
|---|---|---|---|---|---|
| HC | | 1.0 | | | |
| DCP | | | 1.0 | | |
| 25B | | | | 1.0 | |
| DTBP | | | | | 1.0 |
| Curing properties | PGT (minute) | 18 | 29 | 30 | 20 |
| | GT (minute) | 31 | 58 | 50 | 55 |

When the pregels consequently obtained were cooled, they were colorless and transparent. They showed no discernible change in viscosity even after about one month's standing at 30°C.

### EXAMPLES 35 AND 36

Compositions were obtained by following the procedure of Examples 22 to 24, except that 500 g of a vinyl ester resin (produced by The Dow Chemical Company and marketed under the tradename "Delacane 411-C-45") was used in the place of the ortho-phthalic acid type unsaturated polyester resin, 0.1% of TCP was added as a low-temperature catalyst, the amount of Nofmer-TP was changed, and the temperature of the oil bath was fixed at 80°C. As a high-temperature catalyst, 1% of DCP was added. The amounts of Nofmer-TP and catalyst added and the curing properties are shown in Table 15.

**Table 15**

| Example No. | | 35 | 36 |
|---|---|---|---|
| Amount of Nofmer-TP added (%) | | 1.0 | 2.0 |
| Amount of low-temperature catalyst, TCP, added (%) | | 0.1 | 0.1 |
| Amount of high-temperature catalyst, DCP, added (%) | | 1.0 | 1.0 |
| Curing properties | PGT (minute) | 43 | 76 |
| | GT (minute) | 96 | 141 |

It is clearly seen from the examples that, for the vinyl ester resin to be effectively pregelled, the amount of the low-temperature catalyst to be added had to be increased as compared with the amount of the aforementioned ortho-phthalic acid type unsaturated polyester resin. The length of the time for the treatment of pregellation must be also increased. During the course of the former stage of GT, the pregel was in the state of a transparent and slightly hard pudding.

### EXAMPLE 37

A compound was obtained by following the procedure of Examples 1 to 3, except that 500 g of a medially reactive ortho-phthalic acid type unsaturated polyester resin was used instead and 0.5% of Nofmer-MSD and 0.5% of Nofmer-TP, 0.025% of TCP as a low-temperature catalyst, and 1% of DCP as a high-temperature catalyst were added thereto and the temperature of the oil bath was fixed at 80°C. As a result, there was obtained a pregel of highly satisfactory quality showing a PGT of 40 minutes and a GT of 55 minutes.

### EXAMPLE 38

A compound was obtained by following the procedure of Examples 1 to 3, except that 30 g of the same polyurethane polyacrylate type thermosetting acryl resin as used in Example 21 was used instead and 0.25% of TCP, 1% of DCP, and 2% of Nofmer-TP were added thereto, and the temperature of the oil bath was fixed at 80°C. As a result, there was obtained a pregel of highly satisfactory quality showing a PGT of 25 minutes and a GT of 43 minutes.

## Claims

1. A raw-material for pregellation having as a substantially main component there of a radically polymerizable or copolymerizable liquid thermosetting resin, characterized in that the raw-material for pregellation contains therein 0.2 to 10% by weight, based on the amount of the resin, of at least one compound selected from the group consisting of 2,4-diphenyl-4-methyl-1-pentene and terpinolene, 0.001 to 0.5% by weight, based on the amount of the resin, of at least one low temperature-decomposing organic peroxide possessing a 10-hour half-life temperature in the range of 35°C to 80°C, and 0.5 to 2% by weight, based on the amount of the resin, of at least one high temperature-decomposing organic peroxide selected from the group consisting of peroxyketals, peroxyesters, and dialkyl peroxides and possessing a 10-hour half-life temperature falling in the range of 80°C to 140°C and exceeding that of the lower temperature-decomposing organic peroxide by at least 30°C.

2. A raw-material for pregellation as claimed in claim 1, wherein the radically polymerizable or copolymerizable thermosetting resin is at least one member selected from the group consisting of unsaturated polyesters, epoxy acrylate resins, and thermosetting acryl resins.

3. A raw-material for pregellation as claimed in claim 2, wherein the radically polymerizable or copolymerizable thermosetting resin is an unsaturated polyester resin.

4. A method for the preparation of a pregel characterized in heating at temperature in the range of 60° to 100°C a raw-material for pregellation according to any of Claims 1 to 3.

5. A pregel produced by a method according to Claim 4.

6. A method for the production of a molded material from a pregel characterized in that it comprises shaping a pregel according to Claim 5 and heating the resultant shaped product at a temperature in the range of 120° to 170°C.

7. A molded material produced by a method according to Claim 6.

## Patentansprüche

1. Rohmaterial zum Vorgelieren, das als einen wesentlichen Hauptbestandteil ein radikalisch polymerisierbares oder copolymerisierbares flüssiges thermisch härtendes Harz aufweist, **dadurch gekennzeichnet**, daß das Rohmaterial zum Vorgelieren darin enthält 0,2 bis 10 Gew.-%, bezogen auf die Menge des Harzes, von wenigens einer Verbindung, die aus der Gruppe ausgewählt ist, die aus 2,4-Diphenyl-4-methyl-1-penten und Terpinolen besteht, 0,001 bis 0,5 Gew.-%, bezogen auf die Menge des Harzes, von wenigstens einem bei niedriger Temperatur zersetzlichen organischen Peroxid, das eine 10-Stunden-Halbwerts-Temperatur im Bereich von 35°C bis 80°C aufweist, und 0,5 bis 2 Gew.-%, bezogen auf die Menge des Harzes, von wenigstens einem bei hoher Temperatur zersetzlichen organischen Peroxid, das aus der Gruppe ausgewählt ist, die aus Peroxyketalen, Peroxyestern und Dialkylperoxiden besteht, und das eine 10-Stunden-Halbwerts-Temperatur besitzt, die in den Bereich von 80°C bis 140°C fällt und die diejenige des bei niedriger Temperatur zersetzlichen organischen Peroxids um wenigstens 30°C überschreitet.

2. Rohmaterial zum Vorgelieren nach Anspruch 1, bei dem das radikalisch polymerisierbare oder copolymerisierbare thermisch härtende Harz wenigstens ein Glied ist, das aus der Gruppe ausgewählt ist, die aus ungesättigten Polyestern, Epoxyacrylatharzen und thermisch härtenden Acrylharzen besteht.

3. Rohmaterial zum Vorgelieren nach Anspruch 2, bei dem das radikalisch polymerisierbare oder copolymerisierbare thermisch härtende Harz ein ungesättigtes Polyesterharz ist.

4. Verfahren zur Herstellung eines Vorgels, **gekennzeichnet durch** das Erhitzen eines Rohmaterials zum Vorgelieren nach einem der Ansprüche 1 bis 3 auf eine Temperatur im Bereich von 60°C bis 100°C.

5. Vorgel, hergestellt nach einem Verfahren nach Anspruch 4.

6. Verfahren zur Herstellung eines geformten Materials aus einem Vorgel, **dadurch gekennzeichnet**, daß es das Formen eines Vorgels nach Anspruch 5 sowie das Erhitzen des erhaltenen geformten Produkts auf eine Temperatur im Bereich von 120°C bis 170°C umfaßt.

7. Ein geformtes Material, hergestellt in einem Verfahren nach Anspruch 6.

## Revendications

1. Matière première pour la prégélification, ayant comme constituant essentiellement principal une résine thermodurcissable liquide polymérisable ou copolymérisable par polymérisation radicalaire, caractérisée en ce que la matière première pour la prégélification contient de 0,2 à 10 % en poids, par rapport à la quantité de résine, d'au moins un composé choisi dans le groupe comprenant le 2,4-diphényl-4-méthyl-1-pentène et le terpinolène, de 0,001 à 0,5 % en poids par rapport à la quantité de résine d'au moins un peroxyde organique se décomposant à basse température, ayant une température de demi-vie à 10 heures comprise entre 35 et 80 °C, et de 0,5 à 2 % en poids, par rapport à la quantité de résine, d'au moins un peroxyde organique se décomposant à haute température, choisi dans le groupe comprenant les peroxycétals, les peroxyesters et les peroxydes de dialkyle et ayant une période de demi-vie à 10 heures tombant dans l'intervalle de 80 à 140 °C et dépassant d'au moins 30 °C celle du peroxyde organique se décomposant à basse température.

2. Matière première pour la prégélification selon la revendication 1, dans laquelle la résine thermodurcissable polymérisable ou copolymérisable par polymérisation radicalaire est au moins une résine choisie dans le groupe comprenant les polyesters insaturés, les résines époxy acrylates, et les résines acryliques thermodurcissables.

3. Matière première pour la prégélification selon la revendication 2, dans laquelle la résine thermodurcissable polymérisable ou copolymérisable par polymérisation radicalaire est une résine de polyester insaturée.

4. Procédé pour préparer un prégel, caractérisé en ce qu'il consiste à chauffer à une température de 60 à 100 °C une matière première pour la prégélification, selon l'une quelconque des revendications 1 à 3.

5. Prégel produit par un procédé selon la revendication 4.

6. Procédé pour produire un matériau moulé à partir d'un prégel, caractérisé en ce qu'il consiste à former un prégel selon la revendication 5 et à chauffer le produit formé obtenu à une température comprise entre 120 et 170 °C.

7. Matériau moulé produit par un procédé selon la revendication 6.
